# EUROPÄISCHE PATENTSCHRIFT

(11) **EP 1 846 168 B1**
(45) Veröffentlichungstag und Bekanntmachung des Hinweises auf die Patenterteilung: **26.01.2011**
(21) Anmeldenummer: 06707993.9
(22) Anmeldetag: 02.02.2006
(51) Int. Cl.: B04B 9/12

(54) **SCHMIERSYSTEM FÜR EINEN ZENTRIFUGENANTRIEB**
LUBRICATING SYSTEM FOR A CENTRIFUGE DRIVE
SYSTÈME DE LUBRIFICATION POUR ENTRAÎNEMENT CENTRIFUGE

(30) Priorität: 03.02.2005 DE 202005001716 U
(43) Veröffentlichungstag der Anmeldung: 24.10.2007
(73) Patentinhaber: GEA Mechanical Equipment GmbH, 59302 Oelde (DE)
(72) Erfinder: KLEIMANN, Thomas, 59302 Oelde (DE); SENGER, Daniel, 59320 Ennigerloh-Ostenfelde (DE); KOTTENSTEDTE, Thomas, 59302 Oelde (DE)
(74) Vertreter: Dantz, Jan Henning
(86) Internationale Anmeldenummer: PCT/EP2006/050632
(87) Internationale Veröffentlichungsnummer: WO 2006/082225

(56) Entgegenhaltungen:
- EP-A- 0 756 897
- WO-A-89/10794
- US-A- 4 556 331

## Beschreibung

Die Erfindung betrifft eine Zentrifuge, insbesondere einen Separator, mit vertikaler Drehachse, nach dem Oberbegriff des Anspruchs 1.

Separatoren mit vertikaler Drehachse sind an sich seit langem bekannt, so insbesondere in Ausgestaltung mit einer Schleudertrommel, in der ein Tellerpaket aus einer Mehrzahl von in Richtung der Tellerachse axial übereinander liegenden Tellern angeordnet ist.

Bei Separatoren mit vertikaler Drehachse erfolgt i.allg. entlang der Maschinenachse durch ein Zulaufrohr und diesem nachgeschaltete radiale Verteilerkanäle die Produktzufuhr in die Schleudertrommel, wo das Produkt in einen Tellerstapel aus i.allg. dicht zueinander angeordneten, relativ zueinander beabstandeten, konischen (Trenn-)Tellern eintritt. Am Trennteller lagern sich schwerere Feststoffe i.allg. an der Unterseite ab und wandern zum Außenumfang des Tellerpakts, wohingegen die Flüssigkeit nach innen hin fließt.

Neben einer Produktzufuhr von oben in die Trommel ist es auch bekannt, das Produkt von unten z.B. durch eine Hohlspindel zuzuführen, die zumeist auch als Antriebswelle für die Trommel dient. Derart wird das Produkt durch Reibung an der rotierenden Antriebsspindel schonend auf die Betriebsdrehzahl gebracht, was bei der Verarbeitung bestimmter Produkte vorteilhaft ist.

Gerade bei einer derartigen Ausführungsform - aber auch bei einer Produktzufuhr "von oben" in die Trommel - stellt die Lagerung und Schmierung der Antriebsspindel ein besonderes Problem dar.

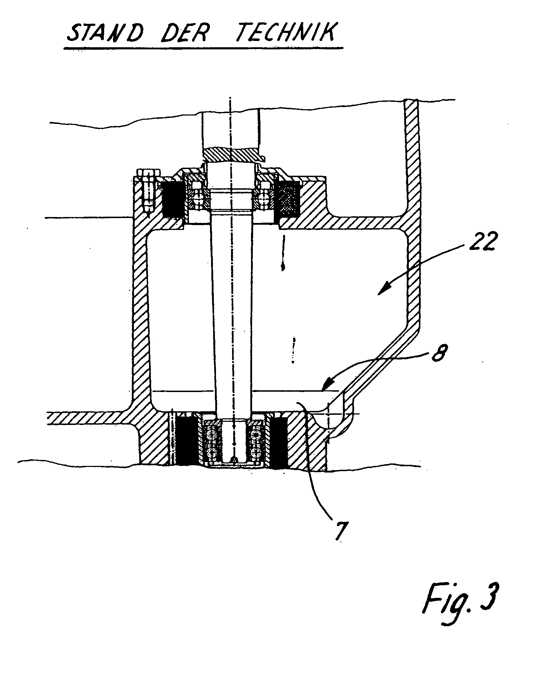

So ist es bekannt, zur Lagerung der Antriebsspindel eine Lagereinrichtung einzusetzen, die wenigstens ein Fußlager und ein Halslager aufweist. Nach einer bekannten Variante dieser Lagerung wird auf der Antriebsspindel relativ zur Antriebsspindel unverdrehbar ein Topf mit einem zylindrischen Außenmantel sowie einer offenen und einer geschlossenen Seite derart an der Antriebsspindel befestigt, dass die offene Seite nach unten gerichtet ist. Der Topf umgibt dabei konzentrisch die Antriebsspindel und das untere Fußlager der Antriebsspindel. Das Fußlager steht im Ölbad. Mit seinem unteren offenen Ende taucht der Topf in ein Ölbad (bzw. einen Ölsumpf) ein. In diesem Bereich ist er beispielsweise mit kleineren Einkerbungen versehen. Einen derartigen Stand der Technik zeigt Fig. 3.

Dreht sich bei dieser Konstruktion die Antriebsspindel, nimmt sie den Topf mit. Infolge der hohen Umdrehungszahl erzeugt dieser im Ölbad einen Ölnebel, mit dem das obere Lager der Antriebsspindel der Schleudertrommel geschmiert wird.

Zum Stand der Technik seien noch die DE 625 916C, die DE 621 907 C, die DE 34 14 774 A, die DE 19 43 204 A, die EP 0 756 897 A1 und die EP 0 215 585 A genannt.

Aus der DE 621 907 ist eine Zentrifuge mit einer Antriebsspindel bekannt, die hohl ausgebildet ist und auch zur Produktzuleitung dient. Die Zentrifuge weist ferner ein Schneckengetriebe auf, das spritzgeschmiert wird und Öl aufschleudert, welches an der Antriebsspindel durch einen Kragen und dann durch deren einziges Wälzlager läuft. An der Antriebsspindel ist unterhalb des Spindellagers ein Ringraum angeordnet, in dem sich Öl sammelt, wobei in dem Ringraum ein weiterer Kragen einer Labyrinthdichtungsanordnung angeordnet ist. Dieser taucht in Öl ein, welches durch den oberen ersten Kragen mit einer Spindeldurchführung gelaufen ist und sich dann im Ringraum sammelt, wobei er Öl aufschleudert, welches durch Kanäle in einen Ölbehälter am Gestell zurückgeleitet wird. Hierdurch soll nach Art einer Labyrinthdichtung verhindert werden, dass das Öl, welches an der Antriebsspindel herunterläuft, ggf. bis in den Bereich der mit einer Drehdurchführung versehenen Produktzuleitung gelangt, wodurch das Schleudergut verschmutzt werden könnte. Die Konstruktion genügt trotz dieser Maßnahme nicht höheren Reinheitsanforderungen, da immer noch Öl in Bereich der Produktzuleitung gelangen kann.

Die DE 625 916 C offenbart eine Abdichtung am Antriebsspindellager, mit der verhindert werden soll, dass bei der Verarbeitung eines leichtflüchtigen Schleudergutes dieses durch das Halslager läuft und in den Antriebsbereich gelangt.

Die DE 34 14 774 A1 offenbart, dass bei einem oberen Halslager einer vertikal ausgerichteten Antriebsspindel für eine Zentrifuge ein Luftstrom von unten durch das Halslager erzeugt wird, der einen Ölnebel mitreißt, mit welchem das Lager geschmiert wird. Zur Erzeugung des Luftstromes dient ein Flügelrad oberhalb des Halslagers.

Nach der DE 1 943 204 A wird der zwischen dem Hals- und dem Fußlager angeordnete Bereich einer Antriebsspindel öl- und luftgekühlt, um zu verhindern, dass sich das zu verarbeitendes Produkt zu stark erwärmt.

Aus der EP 0 215 585 A1 ist es bekannt, unterhalb eines Fußlagers einer Antriebsspindel für eine Zentrifuge einen Ölsumpf anzuordnen, in den ein Topfkragen einer Labyrinthdichtung taucht, der Öltröpfchen aus dem Ölsumpf aufschleudert, um das Hals-und das Fußlager zu schmieren.

Eine gattungsgemäße Konstruktion offenbart die EP 0 756 897 A1, die mit einem Flügel oberhalb eines Lagerführungsringes Öl von unten durch eine Durchführung des Lagerführungsringes saugt, so dass Ölnebel entsteht, der u.a. das Halslager schmiert. Ein Teil des Ölnebels strömt durch den Rotor und das darunter liegende Fußlager zurück. Der Rotor ist oberhalb des Lagers und außerhalb bzw. oberhalb des Lagerführungsringes angeordnet.

Gerade bei einer Produktzufuhr von unten durch die Antriebsspindel ist es wünschenswert, den Ölpegel des Ölbades unterhalb der Fußlagerung zu platzieren, denn hierdurch wird eine einfache Abdichtung möglich. Dabei soll dennoch eine gut funktionsfähige Lagerung und Schmierung des Fußlagers erreicht werden. Gleichzeitig soll das Spindelende für andere Funktionen frei sein, so z.B. für die Produktzufuhr.

Die Schaffung einer derartigen Zentrifuge mit einer gegenüber dem Stand der Technik verbesserten Schmierung des Fußlagers ist die Aufgabe der Erfindung.

Die Erfindung löst diese Aufgabe durch den Gegenstand des Anspruchs 1.

Danach ist das Fußlager von einem Topfelement mit einem zylindrischen Außenmantel und einer offenen Axialseite und einer geschlossenen Axialseite umgeben, den die Antriebsspindel zentrisch durchsetzt, wobei die Antriebsspindel und das Topfelement relativ zueinander unverdrehbar miteinander verbunden sind. Die wenigstens eine Rippe ist ferner direkt an der Antriebsspindel oder an einem sich mit der Antriebsspindel drehenden Element innerhalb des Topfelementes unterhalb des Fußlagers angeordnet und das Topfelement ist mit einer oder mehreren Durchbrechungen bzw. Löchern derart versehen, dass im Betrieb der Zentrifuge ein Unterdruck erzeugbar ist, der den aufgewirbelten Ölnebel aus Luft und Öl von oben durch die Löcher des Topfelementes in das Topfelement hinein und von oben nach unten durch das Fußlager saugt. Derart wird dieses Lager auf einfache Weise zuverlässigst mit einem gerichteten Ölnebelstrom geschmiert, ohne das es selbst im Ölbad angeordnet werden muss.

Da das Fußlager und das Halslager in einem gemeinsamen Gestell- und Schmierraum angeordnet sind, der in seinem unteren Bereich als Ölwanne ausgebildet ist, wobei der Unterdruck das Öl durch das Fußlager saugt, kann das Fußlager vorteilhaft oberhalb des Ölpegels angeordnet werden.

Vorzugsweise sind die Rippen innerhalb des Topfelementes in einem Ringraum unterhalb des Fußlagers um die Antriebsspindel angeordnet.

Besonders vorteilhafte Ausgestaltungen sind den übrigen Unteransprüchen zu entnehmen.

Nachfolgend wird die Erfindung anhand von Ausführungsbeispielen unter Bezug auf die Zeichnung anhand von Ausführungsbeispielen näher beschrieben, wobei auch weitere Vorteile der Erfindung deutlich werden. Es zeigt:
- Fig.1: eine Ansicht eines Fußlagers an einer Separatorspindel mit einer erfin- dungsgemäßen Lagervorrichtung;
- Fig.2: eine Ansicht der Anordnung aus Fig. 1 im Betrieb in vereinfachter Darstel- lung; und
- Fig. 3: einen Ausschnitt schematisiert dargestellten Anordnung nach dem Stand der Technik.

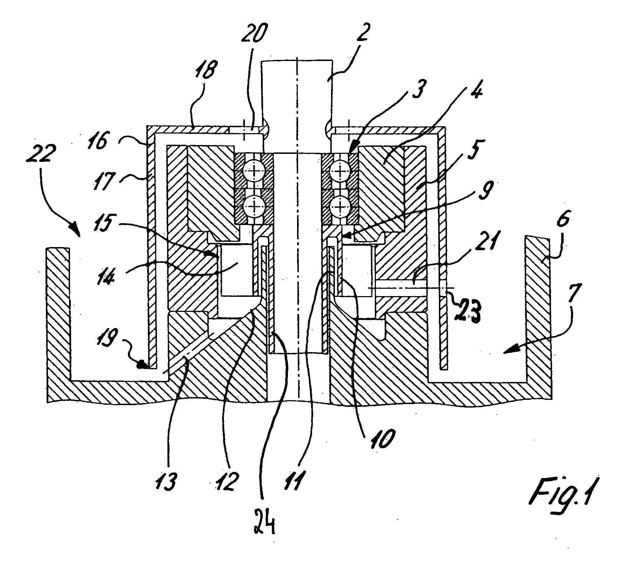

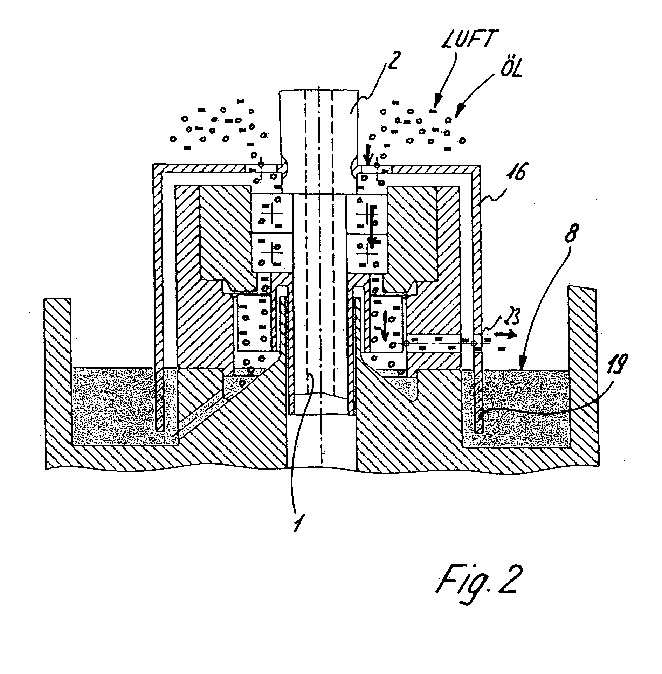

Fig.1 zeigt eine vertikal ausgerichtete Antriebsspindel 2, die optional eine zentrische Bohrung 1 (siehe Fig. 2) nach Art einer Hohlwelle aufweisen kann, auf deren (hier nicht dargestelltes) z.B. konisches oberes Ende eine Schleudertrommel aufgesetzt ist. Die Antriebsspindel 2 ist mittels eines oberen Halslagers (hier nicht zu erkennen) und eines unteren Fußlagers 3 - das hier beispielhaft aus zwei Schrägkugellagern besteht über einen die Lager umgebenden Lagerführungsring 4 (oder Außenlagerring) und ein vorzugsweise zylindrisches Lagergehäuse 5 in bzw. an einem Maschinengestell 6 gelagert. Am Maschinengestell ist in dessen unterem Bereich eine Ölwanne 7 ausgebildet oder angeordnet, die als Gestell- und Schmierraum 22 sowohl das Fußlager als auch das Halslager umgibt (siehe Fig. 3). Die Positionen 4 und 5 könnten auch einteilig ausgebildet sein.

Der Ölpegel 8 des Ölsumpfes (siehe Fig. 2) in der Ölwanne 7 liegt bei ruhender, nicht rotierender Spindel unterhalb des Fußlagers 3.

Unterhalb des Fußlagers 3 ist die Antriebsspindel 2 von einer Labyrinthdichtung 9 umgeben, die verhindert, das Öl bis zum unteren axialen Ende der Antriebsspindel 2 gelangen kann, was insbesondere von Vorteil ist, z.B. wenn die Antriebsspindel 2 - wie hier - innen hohl ist und zur Zufuhr des Schleudergutes in die Schleudertrommel (siehe Bohrung in Figur 2) dient. Die Antriebsspindel 2 ragt in diesem Fall bzw. in der Regel auch durch das Maschinengestell hindurch (Bohrung 1) und die Produktübergabe erfolgt durch eine hier nicht zu erkennende Drehdurchführung.

Die Labyrinthdichtung 9 besteht aus einer sich mit der Antriebsspindel 2 mitdrehenden, oberen Dichtungshülse 10 und einer unteren nicht drehbaren Dichtungshülse 11, die in die obere Dichtungshülse 10 eingreift und am Maschinengestell 6 angeordnet ist. Die Dichtungshülse 10 ragt hier mit einem inneren Hülsenabschnitt 24 in die Dichtungshülse 11 hinein. Zwischen dem inneren Hülsenabschnitt 24 und der unteren Dichtungshülse 11 ist ein schmaler Spalt vorhanden, der die Trennstelle zwischen rotierenden und feststehenden Teilen des Labyrinthsystems bildet. Der Hülsenabschnitt 24 kann ggf. entfallen, wobei dann direkt ein Spalt zwischen Spindel und unterer Dichtungshülse 11 ausgebildet wäre.

Die untere Dichtungshülse 11 geht nach unten hin in ein sich kegelig aufweitendes Teil 12 des Maschinengestells 6 über, in dem Verbindungspassagen 13 zur Ölwanne 7 ausgebildet sind, so dass Öl bzw. Ölnebel durch die hier schräg nach unten sowie außen gerichteten Verbindungspassagen 13 in die Ölwanne 7 bzw. den Ölsumpf fließen kann bzw. befördert werden kann.

Die obere Dichtungshülse 10 ist an ihrer Außenseite mit radial nach außen gerichteten Rippen 14 versehen, die sich mit der oberen Dichtungshülse und der Antriebsspindel 2 im Betrieb mitdrehen.

Radial außerhalb der Rippen 14 im Ringraum 15 ist das Lagergehäuse 5 mit Passagen 21 versehen, welche hier das Lagergehäuse 5 von innen nach außen radial durchsetzen.

Auf die vertikal ausgerichtete Antriebsspindel 2 ist ein sich mit dieser mitdrehendes Topfelement 16 mit einem zylindrischen Außenmantel 17 und einer offenen und einer geschlossenen Axialseite 18 (Boden) aufgesetzt, welches von der Antriebsspindel 2 zentrisch durchsetzt ist.

Dabei ist der Boden 18 oberhalb des Fußlagers 3 angeordnet und an der Antriebsspindel 2 befestigt. Der Außenmantel 17 umgibt konzentrisch das Fußlager 3 und dessen Lagergehäuse 5. Der untere Rand 19 des Topfelementes 16 taucht in der Ölwanne 7 bis unter den Ölpegel 8 (im Ruhezustand).

Im oberen Boden 18 ist das Topfelement 16 um die Antriebsspindel 2 herum mit einer oder mehreren Durchbrechungen bzw. Löchern 20 versehen.

Die Funktion dieser Anordnung ist wie folgt.

Bei Drehungen der Antriebsspindel 2 nimmt diese das Topfelement 16 mit. Dieses setzt das Öl in Rotation und wirbelt dabei gleichzeitig mit seinem unteren Rand 19 Öltröpfchen (in Fig. 2 als Kreise dargestellt) auf, die sich in dem Gestellraum 22 verteilen, so dass sich ein Ölnebel bildet das Halslager oberhalb des Fußlagers 3 geschmiert wird. Der Ölspiegel senkt sich dabei im Bereich des Topfelementes ab und steigt nach außen hin an.

Da auf der oberen Dichtungshülse 10 der Labyrinthdichtung 9 die Rippen 14 angeordnet sind und sich die Rippen 14 mit der Antriebsspindel 2 mitdrehen, wird im Inneren des Topfelementes 16 im Ringraum 15, in dem sich die Rippen 14 mit der Antriebsspindel 2 drehen, ein Unterdruck erzeugt.

Dieser Unterdruck saugt - siehe Fig. 2 - den aufgewirbelten Ölnebel aus Luft (Rechtecke) und Öl (Kreise)von oben durch die Löcher 20 des Topfelementes 16 in das Topfelement 16 hinein und von oben nach unten durch das Fußlager 3, da sich die Rippen 14 unterhalb des Fußlagers 3 befinden.

Die angesaugte Luft (Rechtecke) wird nebst eines Teils des Öl im wesentlichen über die radial angeordneten Passagen 21 zurück in den Gestellraum 22 oberhalb der Ölwanne 7 geleitet.

Hierzu weist das Topfelement 16 in radialer Verlängerung der Bohrungen 21 ebenfalls Bohrungen 23 auf, so dass die Luft - ggf. noch angereichert mit einigen wenigen Öltröpfchen - hier von innen nach außen durch das Topfelement 16 strömen kann.

Ein weiterer Teil des Ölnebels (Öltröpfchen als Kreise) fließen dagegen im wesentlichen durch die weiter unten angeordneten weiteren Verbindungspassagen 13 aus dem Ringraum 15 unterhalb des Fußlagers 3 zurück in die Ölwanne 7.

Derart erfolgt auf konstruktiv einfache und zuverlässige Weise eine verbesserte Schmierung des Fußlagers 3, ohne das sich dieses im Ölsumpf an sich befindet.

### Bezugszeichen

- Bohrung: 1
- Spindel: 2
- Fußlager: 3
- Lagerführungsring: 4
- zylindrische Buchse: 5
- Maschinengestell: 6
- Ölwanne: 7
- Ölpegel: 8
- Labyrinthdichtung: 9
- obere Dichtungshülse: 10
- untere Dichtungshülse: 11
- Teil: 12
- Verbindungspassagen: 13
- Rippen: 14
- Ringraum: 15
- Topfelement: 16
- Außenmantel: 17
- Boden: 18
- Rand: 19
- Löcher: 20
- Passagen: 21
- Gestellraum: 22
- Bohrungen: 23
- Hülsenabschnitt: 24

## Patentansprüche

1. Zentrifuge, insbesondere Separator, mit
a. einer drehbaren, vertikal ausgerichteten Antriebsspindel (2), die mittels einer Lagereinrichtung (3) an einem Maschinengestell (6) gelagert ist, die wenigstens ein Fußlager (3) und vorzugsweise ein oberes Halslager aufweist, die in einem gemeinsamen Gestell- und Schmierraum (22) angeordnet sind, der in seinem unteren Bereich als Ölwanne (7) ausgebildet ist, wobei das Fußlager (3) mit einem dieses umgebenden Außenlagerring bzw. Lagerführungsring (4) und/oder ein Lagergehäuse (5) in einem Maschinengestell (6) gelagert ist, wobei der Ölpegel (8) in der Ölwanne (7) bei nicht rotierender Antriebsspindel (2) unterhalb des Fußlagers (3) liegt,
b. wenigstens einer Rippe (14), die sich mit der Antriebsspindel (2) mitdreht und zur Erzeugung eines Luftstromes dient,
**dadurch gekennzeichnet, dass**
c. das Fußlager von einem Topfelement (16) mit einem zylindrischen Außenmantel (17) und einer offenen Axialseite und einer geschlossenen Axialseite (Boden 18) umgeben ist, den die Antriebsspindel (2) zentrisch durchsetzt und wobei die Antriebsspindel (2) und das Topfelement (16) relativ zueinander unverdrehbar miteinander verbunden sind,
d. die wenigstens eine Rippe (14) direkt an der Antriebsspindel (2) oder an einem sich mit der Antriebsspindel (2) drehenden Element innerhalb des Topfelementes (16) unterhalb des Fußlagers (3) angeordnet ist, und
e. das Topfelement mit einer oder mehreren Durchbrechungen bzw. Löchern (20) versehen ist, so dass im Betrieb der Zentrifuge ein Unterdruck erzeugbar ist, der den aufgewirbelten Ölnebel aus Luft und Öl durch die Löcher (20) des Topfelementes (16) in das Topfelement (16) hinein und von oben durch das Fußlager (3) saugt.

2. Zentrifuge nach Anspruch 1, **dadurch gekennzeichnet, dass** die Rippen (14) in einem Ringraum (15) unterhalb des Fußlagers (3) um die Antriebsspindel (2) verteilt sind.

3. Zentrifuge nach einem der vorstehenden Ansprüche, **dadurch gekennzeichnet, dass** die Antriebsspindel (2) unterhalb des Fußlagers (3) innerhalb des Topfelementes (16) von einer Labyrinthdichtung (9) umgeben ist, die eine mit der Antriebsspindel (2) mitdrehende, obere Dichtungshülse (10) und untere, nicht drehbaren Dichtungshülse (11) aufweist, wobei die Rippen (14) am Außenumfang der oberen drehbaren Dichtungshülse (10) verteilt sind.

4. Zentrifuge nach einem der vorstehenden Ansprüche, **dadurch gekennzeichnet, dass** der die Rippen (14) aufnehmende Ringraum (15) über Verbindungspassagen (13) mit der Ölwanne (7) verbunden ist.

5. Zentrifuge nach einem der vorstehenden Ansprüche, **dadurch gekennzeichnet, dass** das Lagergehäuse (5) mit Passagen (21) versehen ist, welche dieses vom Ringraum (15) bis in den Gestellraum (22) durchsetzen.

6. Zentrifuge nach einem der vorstehenden Ansprüche, **dadurch gekennzeichnet, dass** das Topfelement (16) - vorzugsweise in radialer Verlängerung der Bohrungen (21) - weitere korrespondierende Bohrungen (23) aufweist.

## Claims

1. Centrifuge, in particular separator, with
a. a rotatable vertically oriented drive spindle (2) which is mounted on a machine stand (6) by means of a bearing device (3) and which has at least one foot bearing (3) and preferably one upper neck bearing which are arranged in a common stand and lubricating space (22) which is formed in its lower region as an oil pan (7), the foot bearing (3) being mounted in a machine stand (6) by means of an outer bearing ring or bearing guide ring (4) surrounding it and/or a bearing housing (5), the oil level (8) in the oil pan (7) lying below the foot bearing (3) when the drive spindle (2) is not rotating,
b. at least one rib (14) which co-rotates with the drive spindle (2) and serves for generating an air stream,
**characterized in that**
c. the foot bearing is surrounded by a pot element (16) with a cylindrical outer casing (17) and with an open axial side and a closed axial side (bottom 18), through which pot element the drive spindle (2) passes centrically, the drive spindle (2) and pot element (16) being connected to one another non-rotatably with respect to one another,
d. the at least one rib (14) is arranged directly on the drive spindle (2) or on an element rotating with the drive spindle (2), within the pot element (16), below the foot bearing (3), and
e. the pot element is provided with one or more perforations or holes (20), so that, when the centrifuge is in operation, a vacuum can be generated which sucks the swirled-up oil mist of air and oil through the holes (20) of the pot element (16) into the pot element (16) and from above through the foot bearing (3).

2. Centrifuge according to Claim 1, **characterized in that** the ribs (14) are distributed around the drive spindle (2) in an annular space (15) below the foot bearing (3).

3. Centrifuge according to one of the preceding claims, **characterized in that** the drive spindle (2) is surrounded below the foot bearing (3), within the pot element (16), by a labyrinth seal (9) which has an upper seal sleeve (10), co-rotating with the drive spindle (2), and a lower, non-rotatable seal sleeve (11), the ribs (14) being distributed on the outer circumference of the upper, rotatable seal sleeve (10).

4. Centrifuge according to one of the preceding claims, **characterized in that** the annular space (15) receiving the ribs (14) is connected to the oil pan (7) via connecting passages (13).

5. Centrifuge according to one of the preceding claims, **characterized in that** the bearing housing (5) is provided with passages (21) which pass through it from the annular space (15) into the stand space (22).

6. Centrifuge according to one of the preceding claims, **characterized in that** the pot element (16) has, preferably in the radial prolongation of the bores (21), further corresponding bores (23).

## Revendications

1. Centrifugeuse, en particulier séparateur, comportant
a. une broche d'entraînement (2) rotative, qui est orientée verticalement et qui est montée sur un bâti de machine (6) au moyen d'un dispositif de palier (3), qui comporte au moins un palier inférieur (3) et, de préférence, un palier à collets supérieur, qui sont agencés dans une chambre de bâti et de lubrification (22) commune, qui est réalisée en forme de cuve à huile (7) dans sa partie inférieure, le palier inférieur (3) étant monté dans un bâti de machine (6) avec une bague de palier extérieure ou une bague de guidage (4) entourant ledit palier inférieur, et/ou un logement de palier (5), le niveau d'huile (8) dans la cuve à huile (7) étant situé en dessous du palier inférieur (3) lorsque la broche d'entraînement (2) ne tourne pas,
b. au moins une ailette (14), qui tourne conjointement avec la broche d'entraînement (2) et est destinée à générer un flux d'air,
**caractérisée en ce que**
c. le palier inférieur est entouré par un élément en forme de pot (16) avec une paroi extérieure (17) cylindrique et un côté axial ouvert et un côté axial fermé (fond 18), à travers lequel la broche d'entraînement (2) passe au milieu, et la broche d'entraînement (2) et l'élément en forme de pot (16) étant reliés l'un à l'autre de manière immobile en rotation l'un par rapport à l'autre,
d. ladite au moins une ailette (14) étant agencée à l'intérieur de l'élément en forme de pot (16) en dessous du palier inférieur (3), directement sur la broche d'entraînement (2) ou sur un élément tournant avec la broche d'entraînement (2), et
e. l'élément en forme de pot comporte un ou plusieurs ajours ou trous (20), de telle sorte qu'une dépression peut être générée en cours de service de la centrifugeuse, par laquelle le brouillard formé d'air et d'huile, soulevé en tourbillon, est aspiré à travers les trous (20) de l'élément en forme de pot (16) à l'intérieur de l'élément en forme de pot (16) et depuis le haut à travers le palier inférieur (3).

2. Centrifugeuse selon la revendication 1, **caractérisée en ce que** les ailettes (14) sont réparties autour de la broche d'entraînement (2) dans un chambre annulaire (15) en dessous du palier inférieur (3).

3. Centrifugeuse selon l'une quelconque des revendications précédentes, **caractérisée en ce que** la broche d'entraînement (2), en dessous du palier inférieur (3) à l'intérieur de l'élément en forme de pot (16), est entourée par un joint en labyrinthe (9) qui comporte un manchon d'étanchéité (10) supérieur, tournant conjointement avec la broche d'entraînement (2), et un manchon d'étanchéité (11) inférieur non rotatif, les ailettes (14) étant réparties sur le pourtour extérieur du manchon d'étanchéité (10) supérieur rotatif.

4. Centrifugeuse selon l'une quelconque des revendications précédentes, **caractérisée en ce que** la chambre annulaire (15), logeant les ailettes (14), est reliée à la cuve à huile (7) par des passages de liaison (13).

5. Centrifugeuse selon l'une quelconque des revendications précédentes, **caractérisée en ce que** le logement de palier (5) est muni de passages (21) qui traversent ce dernier depuis la chambre annulaire (15) jusque dans la chambre du bâti (22).

6. Centrifugeuse selon l'une quelconque des revendications précédentes, **caractérisée en ce que** l'élément en forme de pot (16) comporte - de préférence dans le prolongement radial des alésages (21) - d'autres alésages (23) correspondants.
